# EUROPEAN PATENT SPECIFICATION

(11) **EP 4 678 487 B1**
(45) Date of publication and mention of the grant of the patent: **28.10.2026**
(21) Application number: 25179592.8
(22) Date of filing: 28.05.2025
(51) Int. Cl.: B60S 1/40

(54) **ASSEMBLY STRUCTURE OF WINDSHIELD WIPER DRIVING ARM**
MONTAGESTRUKTUR FÜR SCHEIBENWISCHERANTRIEBSARM
STRUCTURE D'ASSEMBLAGE DE BRAS D'ENTRAÎNEMENT D'ESSUIE-GLACE

(30) Priority: 10.07.2024 CN 202410920989
(43) Date of publication of application: 14.01.2026
(73) Proprietor: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patent Partnerschaft mbB

(56) References cited:
- WO-A1-2004/098963
- DE-A1- 102012 100 779
- US-A1- 2012 246 860

## Description

### BACKGROUND OF THE DISCLOSURE

### Technical Field

The technical field relates to a windshield wiper, and more particularly relates to an assembly structure of a windshield wiper driving arm.

### Description of Related Art

A windshield wiper is installed on the exterior surface of the windshield and connected to the driving arm of the car. The driving arm drives the wiper swinging back and forth across the windshield to scrap off rainwater or stains and other foreign objects on the windshield.

Furthermore, the windshield wiper combines the driving arm with the accessory seat, with metal spring plates and a rubber strip mounted on the bottom side of the accessory seat. As a result, the wiper driving arm drives the accessory seat, pressing the metal spring plates and the rubber strip to clean the windshield. Additionally, the wiper driving arm and the accessory seat are assembled through an accessory piece. The combination method between the wiper driving arm and the accessory piece involves a restricting slot on the driving arm and an elastic button on the accessory piece. The elastic button engages with the restricting slot to form the connection. However, since the accessory piece is usually made of plastic parts, the elastic button may age or loose resilience over time and may eventually break away from the restricting slot. As a result, the wiper driving arm may not function properly and may require improvement. US- A-2012/246859 shows an assembly structure of the prior art.

In view of the above drawbacks, the inventor proposes this disclosure based on his expert knowledge and elaborate researches in order to solve the problems of related art

### SUMMARY OF THE INVENTION

This disclosure provides an assembly structure of a windshield wiper driving arm, in which the wiper driving arm is securely coupled with the accessory piece without loosening, thereby providing a stable connection.

This disclosure is an assembly structure of a windshield wiper driving arm, the assembly structure includes an accessory piece and a wiper driving arm. The accessory piece includes a head portion, a main body and a pair of elastic arms. The main body is connected to the head portion. The pair of elastic arms are arranged on two sides of the head portion and two sides of the main body opposite to each other. Each elastic arm includes a pressing section located on the head portion and a positioning section extending to the main body. The positioning section includes a bump located on an end of the elastic arm. The wiper driving arm includes an arm body and a cover connected to the arm body. The cover includes a pair of restricting slots disposed corresponding to the pair of elastic arms, and the wiper driving arm is coupled to the accessory piece through an engagement between the restricting slot and the bump.

In one embodiment of this disclosure, the main body is connected to the head portion, and a stepped portion is defined between the main body and the head portion, the stepped portion comprises a front detent segment and two arc segments connected to the front detent segment, the cover comprises a top surface and two sidewalls connected to the top surface, one side of the top surface abuts against the front detent segment, and the two sidewalls abut against the two arc segments respectively.

In one embodiment of this disclosure, each arc segment comprises a middle arc surface located on each elastic arm, an upper arc surface and a lower arc surface located on two sides of the middle arc surface, the middle arc surface is positioned between the pressing section and the positioning section, an embedding groove is defined between the middle arc surface and the bump, and the side wall of the cover comprises a latch piece located on one side of the restricting slot, and the latch piece is positioned in the embedding groove.

In one embodiment of this disclosure, the main body comprises a supporting rib located on one side of the bump, the cover comprises a resisting piece disposed on the side wall thereof and located on another side of the restricting slot, and the resisting piece abuts against the supporting rib.

In one embodiment of this disclosure, one end of the supporting rib extends toward the head portion and is connected to the lower arc surface.

In one embodiment of this disclosure, the supporting rib extends in a direction parallel to the elastic arm and is configured in an L shape.

In one embodiment of this disclosure, each side wall is bent to form a rail on a side away from the top surface, the main body is inserted between two rails of the two side walls, and each rail abuts against one end of the supporting rib.

In one embodiment of this disclosure, a trench is defined along an outer edge of the elastic arm of the main body.

In one embodiment of this disclosure, a plurality of anti-slip ribs is disposed on a surface of the pressing section.

In one embodiment of this disclosure, the windshield wiper driving arm assembly structure further includes an accessory seat, the accessory seat comprises a pivot, and an axis hole is defined on the main body of the accessory piece, and the accessory seat and the accessory piece are combined through the pivot engaging with the axis hole.

In comparison with the related art, the assembly structure of the windshield wiper driving arm of this disclosure includes an accessory piece with an elastic arm. The elastic arm includes a pressing section and a positioning section, and the positioning section includes a bump. Additionally, the cover of the wiper driving arm features restricting slots corresponding to the elastic arms. The wiper driving arm is combined with the accessory piece through the restricting slot engaging with the bump. This design simplifies the assembly structure of the wiper driving arm, ensures that the wiper driving arm is reliably coupled to the accessory piece without loosening, and achieves a stable connection.

### BRIEF DESCRIPTION OF THE DRAWINGS

FIG. 1 depicts a perspective schematic view of the assembly structure of the windshield wiper driving arm in this disclosure.
FIG. 2 depicts a perspective exploded schematic view of the assembly structure of the windshield wiper driving arm in this disclosure
FIG. 3 depicts a perspective schematic view of the accessory piece in this disclosure.
FIG. 4 depicts a front view of the driving arm combined with the accessory piece in this disclosure.
FIG. 5 depicts a cross-sectional view of line 5-5 in FIG. 4.
FIG. 6 depicts a cross-sectional view of line 6-6 in FIG. 4.
FIG. 7 depicts a cross-sectional view of line 7-7 in FIG. 4.
FIG. 8 depicts a cross-sectional view of line 8-8 in FIG. 4.

### DETAILED DESCRIPTION

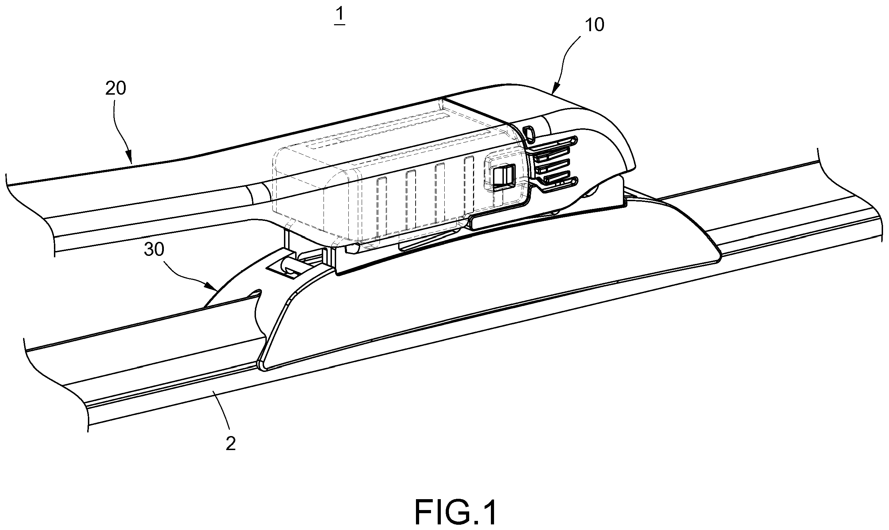

Please refer to FIG.1, which depicts a perspective schematic view of the assembly structure of the windshield wiper driving arm in this disclosure. The assembly structure 1 of the windshield wiper driving arm of this disclosure includes an accessory piece 10, a wiper driving arm 20, and an accessory seat 30. The wiper driving arm 20 sheathes the accessory piece 10 to be combined with each other. The accessory piece 10 is embedded in the accessory seat 30 to configure the assembly structure 1. It is worth noticing that the accessory seat 30 is further combined with components such as a wiper strip 2 on the bottom thereof to configure a windshield wiper assembly. A more detailed description of the assembly structure 1 is as follows.

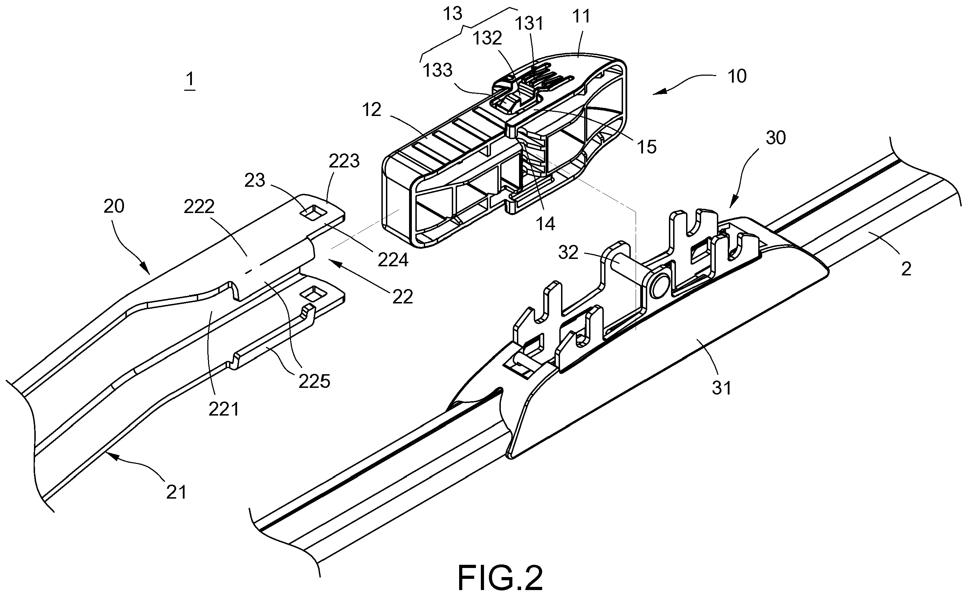

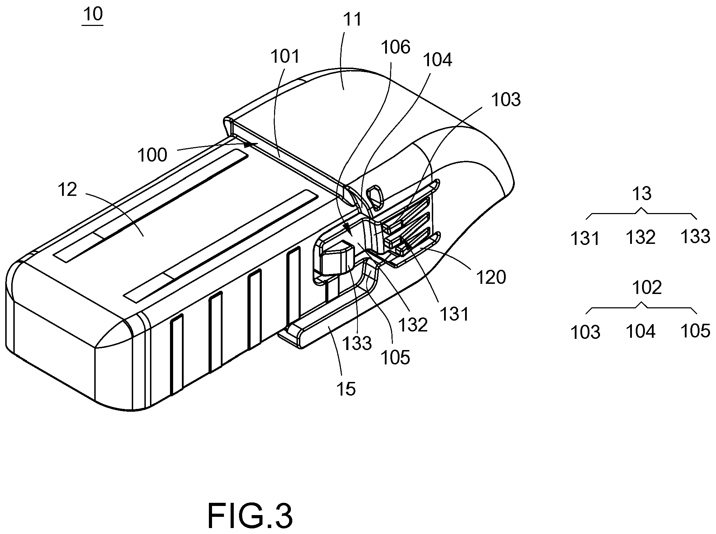

Please refer to FIG.2 to FIG. 4, which depict a perspective exploded schematic view of the assembly structure, a perspective schematic view of the accessory piece, and a front view of the driving arm combined with the accessory piece in this disclosure. The accessory piece 10 of this disclosure includes a head portion 11, a main body 12, and a pair of elastic arms 13. The main body 12 is connected to the head portion 11. The pair of elastic arms 13 are arranged on two sides of the head portion 11 and two sides of the main body 12 opposite to each other. Additionally, each elastic arm 13 includes a pressing section 131 located on the head portion 11 and a positioning section 132 extending to the main body 12. The positioning section 132 includes a bump 133 located on the end of the elastic arm 13. In this embodiment, a trench 120 is defined along the outer edge of the elastic arm 13. Moreover, a plurality of anti-slip ribs 130 are disposed on the surface of the pressing section 131 to prevent slipping and facilitate the pressing of the pressing section 131, thereby driving the positioning section 132 to deform.

The wiper driving arm 20 includes an arm body 21 and a cover 22 connected to the arm body 21. The cover 22 includes a pair of restricting slots 23 disposed corresponding to the pair of elastic arms 13. The wiper driving arm 20 is coupled to the accessory piece 10 through the engagement of the restricting slot 23 and the bump 133.

Furthermore, the accessory seat 30 includes a base 31 and a pivot 32 arranged on the base 31. An axis hole 14 is defined on the main body 12 of the accessory piece 10. The accessory seat 30 and the accessory piece 10 are combined through the pivot 32 engaging with the axis hole 14. As a result, the wiper driving arm 20 is fixed to the accessory seat 30 through the accessory piece 10.

Specifically, the main body 12 is connected to the head portion 11, and a stepped portion 100 is located between the main body 12 and the head portion 11. The stepped portion 100 includes a front detent segment 101 and two arc segments 102 connected to the front detent segment 101. Additionally, each arc segment 102 includes a middle arc surface 103 disposed on each elastic arm 13, an upper arc surface 104 and a lower arc surface 105 located on two sides of the middle arc surface 103. The middle arc surface 103 is positioned between the pressing section 131 and the positioning section 132. An embedding groove 106 is defined between the middle arc surface 103 and the bump 133. It should be noted that the disposition of the embedded groove 106 may increase the elastic force of the positioning section 132 and also increase the displacement of the bump 133 located on the end of the elastic arm 13.

In this embodiment, the cover 22 includes a top surface 221 and two sidewalls 222 connected to the top surface 221. One side of the top surface 221 abuts against the front detent segment 101, and the two sidewalls 222 abut against the two arc segments 102 respectively. Furthermore, the side wall 222 includes a latch piece 223 located on one side of the restricting slot 23, and the latch piece 223 is located in the embedding groove 106.

In one embodiment of this disclosure, the main body 12includes a supporting rib 15 located on one side of each bump 133. On the other hand, the side wall 222 of the cover 22 includes a resisting piece 224 located on the other side of the restricting slot 23. The resisting piece 224 abuts against the supporting rib 15. One end of the supporting rib 15 extends toward the head portion 11 and is connected to the lower arc surface 105. Additionally, the supporting rib 15 extends in a direction parallel to the elastic arm 13 and is configured in an L shape.

In more detail, each side wall 222 is bent to form a rail 225 on the side away from the top surface 221. The main body 12 is inserted between two rails 225, and each rail 225 abuts against one end of the supporting rib 15. It should be noted that the arrangement of the supporting rib 15 is used to support the resisting piece 224 and prevents the resisting piece 224 from deforming due to excessive pressure when the driving arm 20 is actuated, and which may otherwise cause the protrusion 133 to be disengaged from the restricting slot 23.

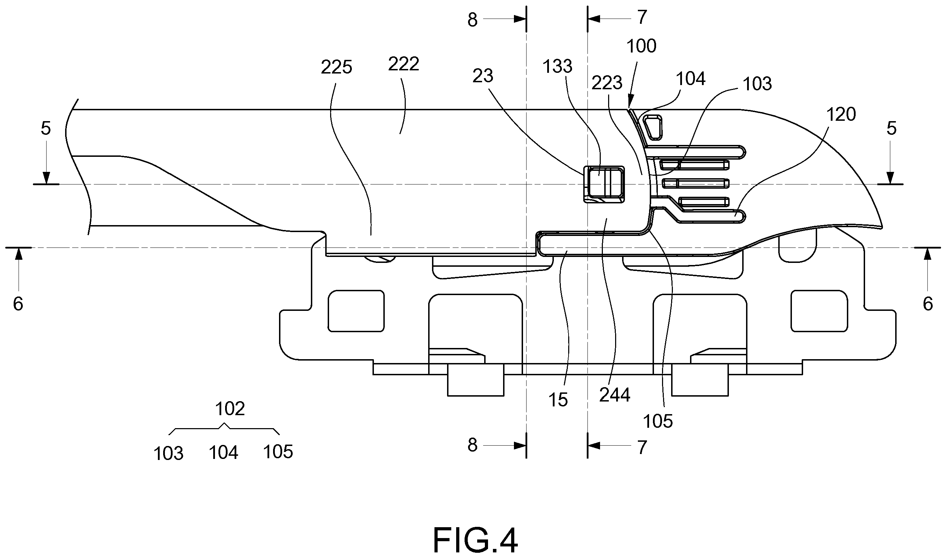

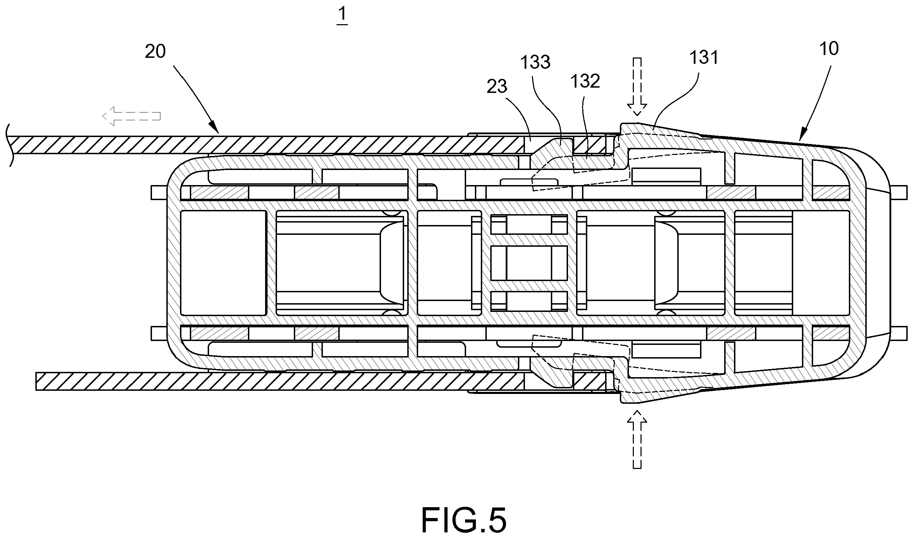

Please refer to FIG. 5 to FIG. 8, which depict cross sectional views of line 5-5, 6-6, 7-7 and 8-8 in FIG. 4, respectively. As shown in FIG. 5, the wiper driving arm 20 in this disclosure is coupled to the accessory piece 10 through the engagement of each restricting slot 23 with the bump 133. Similarly, the accessory piece 10 is released from the engagement of the restricting slot 23 through pressing the pressing section 131, which drives the positioning section 132 to deform. Accordingly, the wiper driving arm 20 may be detached from the accessory piece 10.

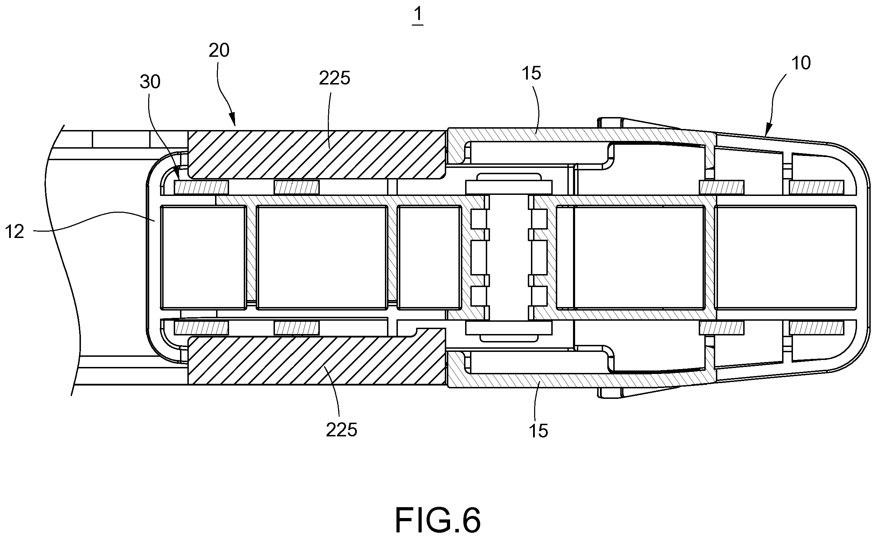

Please further refer to FIG. 6. The wiper driving arm 20 of this disclosure is bent to form a rail 225 located on the bottom of the side wall 222. Additionally, the main body 12 of the accessory piece 10 includes a pair of supporting ribs 15, and each rail 225 abuts against one end of the supporting rib 15.

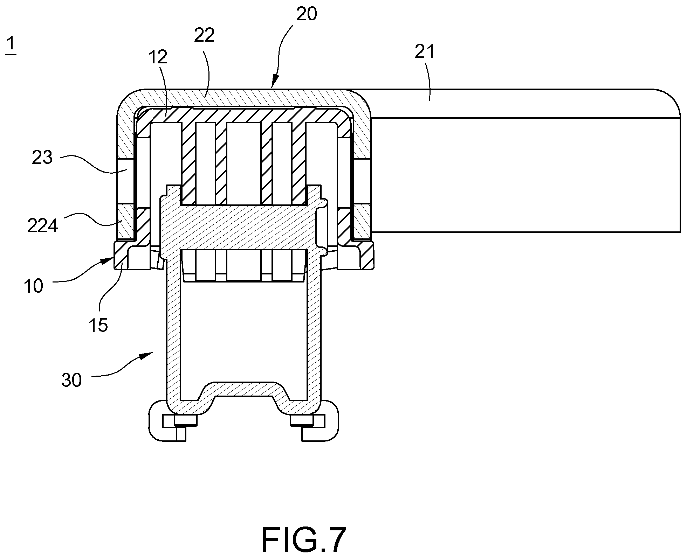

As shown in FIG. 7, the cover 22 of the wiper driving arm 20 in this disclosure includes a resisting piece 224 located on one side of the restricting slot 23 of the side wall 222. When the wiper driving arm 20 is coupled to the accessory piece 10, the resisting piece 224 abuts against the supporting rib 15.

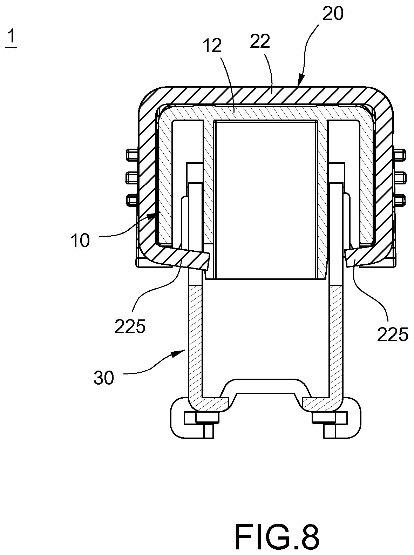

Please further refer to FIG. 8. The wiper driving arm 20 of this disclosure is bent to form a rail 225 on the bottom of the side wall 222. When the wiper driving arm 20 is coupled to the accessory piece 10, the cover 22 of the wiper driving arm 20 sheathes the accessory piece 10. Then, the main body 12 of the accessory piece 10 is inserted between the trails 225 of the cover 22.

As will become apparent to the skilled person when studying the above disclosure, the subject-matter of the appended claims can also be combined in a different manner as specifically claimed. In particular the term "according to claim 1" and similar shall be deemed to encompass also the meaning "according to any of the preceding (antecedent) claims".

## Claims

1. An assembly structure of a windshield wiper driving arm, the assembly structure (1) comprising:
an accessory piece (10), comprising a head portion (11), a main body (12), and a pair of elastic arms (13), wherein the main body (12) is connected to the head portion (11), the pair of elastic arms (13) are arranged on two sides of the head portion (11) and two sides of the main body (12) opposite to each other, each elastic arm (13) comprises a pressing section (131) located on the head portion (11) and a positioning section (132) extending to the main body (12), and the positioning section (132) comprises a bump (133) located on an end of the elastic arm (13); and;
a wiper driving arm (20), comprising an arm body (21) and a cover (22) connected to the arm body (21), wherein the cover (22) comprises a pair of restricting slots (23) disposed corresponding to the pair of elastic arms (13), and the wiper driving arm (20) is coupled to the accessory piece (10) through an engagement between the restricting slot (23) and the bump (133).

2. The assembly structure according to claim 1, wherein the main body (12) is connected to the head portion (11), and a stepped portion (100) is located between the main body (12) and the head portion (11), the stepped portion (100) comprises a front detent segment (101) and two arc segments (102) connected to the front detent segment (101), the cover (22) comprises a top surface (221) and two sidewalls (222) connected to the top surface (221), one side of the top surface (221) abuts against the front detent segment (101), and the two sidewalls (222) abut against the two arc segments (102) respectively.

3. The assembly structure (1) according to claim 2, wherein each arc segment (102) comprises a middle arc surface (103) disposed on each elastic arm (13), an upper arc surface (104) and a lower arc surface (105) located on two sides of the middle arc surface (103), the middle arc surface (103) is positioned between the pressing section (131) and the positioning section (132), an embedding groove (106) is defined between the middle arc surface (103) and the bump (133), and the cover (22) comprises a latch piece (223) disposed on the side wall thereof and located on one side of the restricting slot (23), and the latch piece (223) is positioned in the embedding groove (106).

4. The assembly structure (1) according to claim 3, wherein the main body (12) comprises a supporting rib (15) located on one side of the bump (133), the cover (22) comprises a resisting piece (224) disposed on the side wall (222) thereof and located on another side of the restricting slot (23), and the resisting piece (224) abuts against the supporting rib (15).

5. The assembly structure (1) according to claim 4, wherein one end of the supporting rib (15) extends toward the head portion (11) and is connected to the lower arc surface (105).

6. The assembly structure (1) according to claim 4, wherein the supporting rib (15) extends in a direction parallel to the elastic arm (13) and is configured in an L shape.

7. The assembly structure (1) according to claim 4, wherein each side wall (222) is bent to form a rail (225) on a side away from the top surface (221), the main body (12) is inserted between two rails (225) of the two side walls (224), and each rail (225) abuts against one end of the supporting rib (15).

8. The assembly structure (1) according to claim 1, wherein a trench (120) is defined along an outer edge of the elastic arm (13) of the main body (12).

9. The assembly structure (1) according to claim 1, wherein a plurality of anti-slip ribs (130) is disposed on a surface of the pressing section (131).

10. The assembly structure (1) according to claim 1, further comprising an accessory seat (30), wherein the accessory seat (30) comprises a pivot (32), and an axis hole (14) is defined on the main body (12) of the accessory piece (10), and the accessory seat (30) and the accessory piece (10) are combined through the pivot (32) engaging with the axis hole (14).

## Patentansprüche

1. Montagestruktur für einen Scheibenwischerantriebsarm, wobei die Montagestruktur (1) umfasst:
ein Zusatzstück (10), das einen Kopfabschnitt (11), einen Hauptkörper (12) und ein Paar elastischer Arme (13) umfasst, wobei der Hauptkörper (12) mit dem Kopfabschnitt (11) verbunden ist, das Paar elastischer Arme (13) an zwei Seiten des Kopfabschnitts (11) und an zwei einander gegenüberliegenden Seiten des Hauptkörpers (12) angeordnet ist, wobei jeder elastische Arm (13) einen am Kopfabschnitt (11) angeordneten Drückabschnitt (131) und einen sich zum Hauptkörper (12) erstreckenden Positionierabschnitt (132) umfasst, und der Positionierabschnitt (132) einen Vorsprung (133) umfasst, der sich an einem Ende des elastischen Arms (13) befindet; und;
einen Scheibenwischerantriebsarm (20), der einen Armkörper (21) und eine mit dem Armkörper (21) verbundene Abdeckung (22) umfasst, wobei die Abdeckung (22) ein Paar Begrenzungsschlitze (23) aufweist, die entsprechend dem Paar elastischer Arme (13) angeordnet sind, und der Scheibenwischerantriebsarm (20) über einen Eingriff zwischen dem Begrenzungsschlitz (23) und dem Vorsprung (133) mit dem Zusatzstück (10) gekoppelt ist.

2. Montagestruktur nach Anspruch 1, wobei der Hauptkörper (12) mit dem Kopfabschnitt (11) verbunden ist und sich zwischen dem Hauptkörper (12) und dem Kopfabschnitt (11) ein Abstufungsabschnitt (100) befindet, wobei der Abstufungsabschnitt (100) ein vorderes Rastsegment (101) und zwei mit dem vorderen Rastsegment (101) verbundene Bogensegmente (102) umfasst (101) verbunden sind, die Abdeckung (22) eine Oberfläche (221) und zwei mit der Oberfläche (221) verbundene Seitenwände (222) umfasst, wobei eine Seite der Oberfläche (221) an das vordere Rastsegment (101) anstößt und die beiden Seitenwände (222) jeweils an die beiden Bogensegmente (102) anstoßen.

3. Montagestruktur (1) nach Anspruch 2, wobei jedes Bogensegment (102) eine an jedem elastischen Arm (13) angeordnete mittlere Bogenfläche (103), eine obere Bogenfläche (104) und eine untere Bogenfläche (105) umfasst, die sich zu beiden Seiten der mittleren Bogenfläche (103) befinden, wobei die mittlere Bogenfläche (103) zwischen dem Drückabschnitt (131) und dem Positionierabschnitt (132) angeordnet ist, zwischen der mittleren Bogenfläche (103) und dem Vorsprung (133) eine Einbettungsnut (106) ausgebildet ist, und die Abdeckung (22) ein Verriegelungsstück (223) umfasst, das an ihrer Seitenwand angeordnet ist und sich auf einer Seite des Begrenzungsschlitzes (23) befindet, wobei das Verriegelungsstück (223) in der Einbettungsnut (106) positioniert ist.

4. Montagestruktur (1) nach Anspruch 3, wobei der Hauptkörper (12) eine Stützrippe (15) aufweist, die sich auf einer Seite des Vorsprungs (133) befindet, die Abdeckung (22) ein an ihrer Seitenwand (222) angeordnetes und auf einer anderen Seite des Begrenzungsschlitzes (23) befindliches Widerstandsstück (224) aufweist, und das Widerstandsstück (224) an der Stützrippe (15) anliegt.

5. Montagestruktur (1) nach Anspruch 4, wobei sich ein Ende der Stützrippe (15) in Richtung des Kopfabschnitts (11) erstreckt und mit der unteren Bogenfläche (105) verbunden ist.

6. Montagestruktur (1) nach Anspruch 4, wobei sich die Stützrippe (15) in einer Richtung parallel zum elastischen Arm (13) erstreckt und L-förmig ausgebildet ist.

7. Montagestruktur (1) nach Anspruch 4, wobei jede Seitenwand (222) so gebogen ist, dass sie auf einer von der Oberfläche (221) abgewandten Seite eine Schiene (225) bildet, der Hauptkörper (12) zwischen zwei Schienen (225) der beiden Seitenwände (224) eingesetzt ist und jede Schiene (225) an einem Ende der Stützrippe (15) anliegt.

8. Montagestruktur (1) nach Anspruch 1, wobei entlang einer Außenkante des elastischen Arms (13) des Hauptkörpers (12) ein Graben (120) ausgebildet ist.

9. Montagestruktur (1) nach Anspruch 1, wobei an einer Oberfläche des Drückabschnitts (131) mehrere Rutschsicherungsrippen (130) angeordnet sind.

10. Montagestruktur (1) nach Anspruch 1, die ferner einen Zusatzsitz (30) umfasst, wobei der Zusatzsitz (30) einen Drehzapfen (32) aufweist und am Hauptkörper (12) des Zusatzstücks (10) ein Achsenloch (14) ausgebildet ist, und der Zusatzsitz (30) und das Zusatzstück (10) durch Eingriff des Drehzapfens (32) in das Achsenloch (14) miteinander verbunden sind.

## Revendications

1. Structure d'assemblage de bras d'entraînement d'essuie-glace, la structure d'assemblage (1) comprenant :
une pièce accessoire (10), comprenant une partie de tête (11), un corps principal (12) et une paire de bras élastiques (13), dans laquelle le corps principal (12) est relié à la partie de tête (11), la paire de bras élastiques (13) est disposée de part et d'autre de la partie de tête (11) et de part et d'autre du corps principal (12), en vis-à-vis l'une de l'autre, chaque bras élastique (13) comprenant une section de pression (131) située sur la partie de tête (11) et une section de positionnement (132) s'étendant vers le corps principal (12), et la section de positionnement (132) comprend une bosse (133) située à une extrémité du bras élastique (13) ; et ;
un bras d'entraînement d'essuie-glace (20), comprenant un corps de bras (21) et un couvercle (22) relié au corps de bras (21), dans lequel le couvercle (22) comprend une paire de fentes de restriction (23) disposées en correspondance avec la paire de bras élastiques (13), et le bras d'entraînement d'essuie-glace (20) est couplé à la pièce accessoire (10) par un engagement entre la fente de restriction (23) et la bosse (133).

2. Structure d'assemblage selon la revendication 1, dans laquelle le corps principal (12) est relié à la partie de tête (11), et une portion étagée (100) est située entre le corps principal (12) et la partie de tête (11), la portion étagée (100) comprenant un segment d'arrêt avant (101) et deux segments d'arc (102) reliés au segment d'arrêt avant (101), le couvercle (22) comprend une surface supérieure (221) et deux parois latérales (222) reliées à la surface supérieure (221), un côté de la surface supérieure (221) venant en butée contre le segment d'arrêt avant (101), et les deux parois latérales (222) venant en butée respectivement contre les deux segments d'arc (102).

3. Structure d'assemblage (1) selon la revendication 2, dans laquelle chaque segment d'arc (102) comprend une surface d'arc médiane (103) disposée sur chaque bras élastique (13), une surface d'arc supérieure (104) et une surface d'arc inférieure (105) situées de part et d'autre de la surface d'arc médiane (103), la surface d'arc médiane (103) est positionnée entre la section de pression (131) et la section de positionnement (132), une gorge d'emboîtement (106) est définie entre la surface d'arc médiane (103) et la bosse (133), et le couvercle (22) comprend une pièce de verrouillage (223) disposée sur sa paroi latérale et située d'un côté de la fente de restriction (23), et la pièce de verrouillage (223) est positionnée dans la gorge d'emboîtement (106).

4. Structure d'assemblage (1) selon la revendication 3, dans laquelle le corps principal (12) comprend une nervure de support (15) située d'un côté de la bosse (133), le couvercle (22) comprend une pièce de résistance (224) disposée sur sa paroi latérale (222) et située de l'autre côté de la fente de restriction (23), et la pièce de résistance (224) vient en butée contre la nervure de support (15).

5. Structure d'assemblage (1) selon la revendication 4, dans laquelle une extrémité de la nervure de support (15) s'étend vers la partie de tête (11) et est reliée à la surface d'arc inférieure (105).

6. Structure d'assemblage (1) selon la revendication 4, dans laquelle la nervure de support (15) s'étend dans une direction parallèle au bras élastique (13) et est configurée en forme de L.

7. Structure d'assemblage (1) selon la revendication 4, dans laquelle chaque paroi latérale (222) est pliée pour former un rail (225) sur un côté opposé à la surface supérieure (221), le corps principal (12) est inséré entre les deux rails (225) des deux parois latérales (224), et chaque rail (225) vient en butée contre une extrémité de la nervure de support (15).

8. Structure d'assemblage (1) selon la revendication 1, dans laquelle une tranchée (120) est définie le long d'un bord extérieur du bras élastique (13) du corps principal (12).

9. Structure d'assemblage (1) selon la revendication 1, dans laquelle une pluralité de nervures antidérapantes (130) est disposée sur une surface de la section de pression (131).

10. Structure d'assemblage (1) selon la revendication 1, comprenant en outre un siège accessoire (30), dans laquelle le siège accessoire (30) comprend un pivot (32), et un trou d'axe (14) est défini sur le corps principal (12) de la pièce accessoire (10), et le siège accessoire (30) et la pièce accessoire (10) sont assemblés par l'engagement du pivot (32) dans le trou d'axe (14).
